# EUROPÄISCHE PATENTSCHRIFT

(11) **EP 1 379 373 B1**
(45) Veröffentlichungstag und Bekanntmachung des Hinweises auf die Patenterteilung: **18.07.2007**
(21) Anmeldenummer: 02732522.4
(22) Anmeldetag: 22.03.2002
(51) Int. Cl.: B29C 51/44, B29C 51/46, B26D 7/26, B29C 69/00, B29C 51/08

(54) **VERFAHREN UND VORRICHTUNG ZUM FORMEN VON GEGENSTÄNDEN AUS EINEM MATERIALSTRANG UND ZUM VEREINZELN DER GEGENSTÄNDE**
METHOD AND DEVICE FOR FORMING OBJECTS FROM A MATERIAL STRAND AND FOR SEPARATING SAID OBJECTS
PROCEDE ET DISPOSITIF PERMETTANT DE FACONNER DES OBJETS A PARTIR DE BARRES DE MATIERE ET D'INDIVIDUALISER CES OBJETS

(30) Priorität: 09.04.2001 DE 10117761
(43) Veröffentlichungstag der Anmeldung: 14.01.2004
(73) Patentinhaber: BSH Bosch und Siemens Hausgeräte GmbH, 81739 München (DE)
(72) Erfinder: THEUERKORN, Jochen, 89168 Niederstetzingen (DE); FUCHS, Michael, 89518 Heidenheim (DE); Fröhlich, Gerd, 89564 Nattheim-Fleinheim (DE)
(86) Internationale Anmeldenummer: PCT/EP2002/003272
(87) Internationale Veröffentlichungsnummer: WO 2002/081181

(56) Entgegenhaltungen:
- US-A- 3 265 265
- US-A- 4 086 045
- US-A- 5 904 891
- US-B1- 6 435 067

## Beschreibung

Die vorliegende Erfindung betrifft ein Verfahren und eine Vorrichtung zum Formen von Gegenständen, insbesondere durch Tiefziehen, aus einem Materialstrang und anschließendem Vereinzeln der Gegenstände.

Für die Serienproduktion von Gegenständen aus Metall- oder Kunststoff-Flachmaterial sind Produktionsvorrichtungen bekannt, durch die ein von einer Vorratsrolle abgewickelter Ausgangs-Materialstrang schrittweise entlang einer Förderstrecke gefördert wird und dabei zunächst ein Formwerkzeug passiert, in dem das Relief der zu erzeugenden Gegenstände in dem zusammenhängenden Materialstrang geformt wird, und anschließend der Materialstrang zwischen aufeinanderfolgenden Reliefs in einer Trenneinrichtung zerlegt wird, um die fertigen Gegenstände zu erhalten. Bei einer solchen Vorrichtung ist es von höchster Bedeutung, dass die von der Trenneinrichtung zwischen den einzelnen Reliefs erzeugten Schnitte exakt entlang der vorgesehenen Ränder der zu produzierenden Gegenstände verlaufen. Jede Abweichung der Lage der Schnitte, die ein gegebenes Toleranzintervall verläßt, führt dazu, dass die Gegenstände aufwendig von Hand nachbearbeitet werden müssen, oder dass Ausschuss produziert wird.

Um dieses Problem zu bekämpfen, sind Produktionsvorrichtungen mit einer Erfassungseinrichtung entwickelt worden, die eingesetzt wird, um eine markante Stelle an einem in dem Strang geformten Relief zu erkennen und ein Schneidwerkzeug der Trenneinrichtung in Kenntnis einer gewünschten Lage des Randes relativ zu der markanten Stelle so zu positionieren, dass der gewünschte Rand exakt geschnitten werden kann.

Es liegt auf der Hand, dass bei dieser bekannten Lösung die Positionssteuerung des Schneidwerkzeugs nicht exakter sein kann, als der Genauigkeit des Erfassungsergebnisses der Erfassungseinrichtung entspricht. Diese Genauigkeit hängt aber wiederum ab von der Beschaffenheit der markanten Stelle. So ist ein stark erhabenes Merkmal im allgemeinen genauer erfassbar als ein wenig erhabenes oder gar ein vertieftes, und ein scharfkantiges Merkmal ist genauer erfassbar als eines mit abgerundeten Kanten. Dies hat die unangenehme Folge, dass die Arbeitsgenauigkeit einer Produktionsvorrichtung beim Schneiden der Kanten von aus einem Strang geformten Gegenständen vom Relief dieser Gegenstände abhängig ist. Da diese Genauigkeit nicht auf einfache Weise abgeschätzt werden kann, kann sie bei der Konstruktion der zu produzierenden Gegenstände nicht befriedigend berücksichtigt werden, so dass aufwendige Konstruktionsänderungen, gegebenenfalls mit Abänderungen der verwendeten Formwerkzeuge, nötig werden können.

Dieses Problem wird noch dadurch verschärft, dass man bei der Konstruktion von in einer derartigen Vorrichtung zu produzierenden Gegenständen im allgemeinen bestrebt ist, scharfe Kanten zu vermeiden, da diese noch während der Formung oder im späteren Gebrauch des Gegenstands leicht Bruchstellen bilden können.

In der US 4,086,045 sind ein Verfahren und eine Vorrichtung zum Herstellen von dünnwandigen Formlingen aus einem thermoplastischen Material offenbart. Das thermoplastische Material wird in einem Extruder bis zur Fliessfähigkeit verdichtet und erhitzt und in Form eines plastischen Bandes aus einer schlitzförmigen Düse gegossen. Anschließend wird das plastische Band einer Thermoverformung zur Bildung der gewünschten Formlinge unterworfen. Die im plastischen Band gebildeten Formlinge werden danach ausgeschnitten und abtransportiert.

Aus der US 5,904,891 ist ein Verfahren zum Herstellen von Scheiben für eine Fotofilmkassette bekannt. Die Scheiben werden aus einer Bahn aus thermoplastischem Harz hergestellt. Die thermoplastische Bahn wird dabei erhitzt und erweicht. Mittels Überdruck- und/oder Saugdruckbeaufschlagung wird ein scheibenartige Abschnitte aufweisendes Muster in die Bahn geformt. Anschließend werden die scheibenartigen Abschnitte aus der Bahn ausgeschnitten.

Der US 3,265,265 ist eine u-förmige Klemmbefestigung für einen thermoplastischen Film zu entnehmen.

Es besteht daher Bedarf nach einer Vorrichtung und einem Verfahren Formen von Gegenständen aus einem Materialstrang und zum Vereinzeln dieser Gegenstände, die es ermöglichen, unabhängig von dem spezifischen Relief eines zu produzierenden Gegenstands den Vorgang des Auseinandertrennens von auf dem Streifen erzeugten Reliefs in fertige Gegenstände so zu steuern, dass Schnitte exakt entlang der gewünschten Ränder der Gegenstände erzeugt werden.

Diese Aufgabe wird erfindungsgemäß gelöst durch ein Verfahren mit den Merkmalen des Anspruchs 1 bzw. eine Vorrichtung mit den Merkmalen des Anspruchs 13. Indem erfindungsgemäß das von der Erfassungseinrichtung zu erfassende Merkmal getrennt von dem Relief der zu produzierenden Gegenstände erzeugt wird, kann dieses Referenzmerkmal allein im Hinblick auf seine Erfassbarkeit ausgewählt werden, ohne dass Gesichtspunkte betreffend die mechanische Belastbarkeit der fertigen Gegenstände, die Vermeidung von Ausschuss bei der Produktion oder dergleichen berücksichtigt werden müssen. Im Gegensatz zu einem Merkmal des Reliefs des zu produzierenden Gegenstands kann das Referenzmerkmal daher im Prinzip beliebig scharfe, leicht und exakt zu erfassende Konturen aufweisen. Da es von dem ersten Relief getrennt von einem außerhalb des zum Formen des Reliefs verwendeten Formwerkzeugs angeordneten Werkzeug erzeugt wird, ist das Referenzmerkmal später in dem fertigen Gegenstand nicht enthalten.

Vorzugsweise ist das Referenzmerkmal ein Durchbruch. Dieser kann durch ein Stanzwerkzeug mit einem Dorn und einem Körper mit zu dem Dorn komplementärer Aussparung auf einfachste Weise mit scharfen Kanten erzeugt werden. Er kann entfernt von den Rändern der Materialbahn und mit einem in sich geschlossenen Rand ausgebildet sein, oder er kann an einen Rand der Materialbahn angrenzen und randoffen sein.

Das Referenzmerkmal hat wenigstens eine senkrecht zur Förderrichtung des Materialstrangs orientierte Kontur. Diese Orientierung gewährleistet, dass die Erfassung der Kontur nicht durch ein Spiel des Materialstrangs quer zur Förderrichtung verfälscht werden kann.

Als Erfassungseinrichtung zum Erfassen der Position des Referenzmerkmals eignen sich insbesondere optische Vorrichtungen, im Falle eines Durchbruchs etwa eine Lichtschranke, insbesondere eine Laserlichtschranke. Diese hat neben der Berührungsfreiheit den zusätzlichen Vorteil, dass eine exakte Erfassung der Position des Durchbruchs selbst dann möglich ist, wenn eine Photodetektorzelle zum Erfassen von durch den Durchbruch hindurch getretenem Laserlicht in einem beträchtlichen Abstand von dem Materialstrang angeordnet ist.

Wenn das Relief in an sich bekannter Weise durch Gegeneinanderbewegen und Auseinanderbewegen von Teilen eines mehrteiligen Formwerkzeugs erzeugt wird, so ist es bevorzugt, dass das Referenzmerkmal nach Beginn des Gegeneinanderbewegens und vor Ende des Auseinanderbewegens der Formwerkzeugteile in einer Zeitspanne erzeugt wird, in der diese Teile mit dem zu formenden Abschnitt des Materialstrangs in Eingriff sind. Auf diese Weise ist der Materialstrang während des Erzeugens des Referenzmerkmals gut fixiert, so dass das Referenzmerkmal in einer exakten reproduzierbaren örtlichen Beziehung zu dem zu formenden Gegenstand erzeugt wird. Darüber hinaus ist es wünschenswert, dass das Referenzmerkmal frühestens gegen Ende einer Gegeneinanderbewegung der Teile des Formwerkzeugs erzeugt wird, um zu gewährleisten, dass Materialverlagerungsvorgänge, die im Laufe des Formen des Reliefs auch außerhalb der Formwerkzeuge auftreten können, die Positionsgenauigkeit des Referenzmerkmals nicht beeinträchtigen.

Dies ließe sich auf einfache Weise gewährleisten, wenn die Referenzmarkierung in der Phase des Auseinanderbewegens der Teile des Formwerkzeugs erzeugt wird. Unter dem Gesichtspunkt eines einfachen Aufbaus der Vorrichtung ist allerdings eine Erzeugung des Referenzmerkmals am Ende der Gegeneinanderbewegung der Formwerkzeugteile bevorzugt, da dies die Erzeugung des Referenzmerkmals mit Hilfe von starr an die Formwerkzeugteile gekoppelten Hilfsmitteln wie etwa den oben bereits erwähnten Dorn und Körper mit komplementärer Aussparung ermöglicht.

Zweckmäßigerweise erfolgt das Trennen zweier aufeinanderfolgender Reliefs durch zwei Schnitte, von denen einer in Höhe des in Förderrichtung vorderen Endes des ersten Reliefs und der andere in Höhe des in Förderrichtung hinteren Endes des zweiten Reliefs erfolgt. Dadurch ist es möglich, Schwankungen des Abstandes zwischen aufeinanderfolgenden Reliefs zu kompensieren, die aus Ungenauigkeiten bei der Förderung des Materialstrangs oder aus einem Verziehen des Materials während der Formung der Reliefs resultieren können. Die zwei Schnitte werden zweckmäßigerweise erzeugt, ohne dass der Materialstrang zwischenzeitlich gefördert wird.

Wenn die Strecke, um die der Strang nach jedem Formen eines Reliefs weiter gefördert wird, aufgrund von Ungenauigkeiten des Fördermechanismus variiert, so führt dies dazu, dass die Position, an denen die Erfassungseinrichtung das jeweils einem Relief zugeordnete Referenzmerkmal erfasst, von einem Relief zum nächsten variiert. Der Abstand von einem Relief zum darauffolgenden ist jedoch konstant. In einem solchen Fall werden die zwei Schnitte jeweils mit einem vorgegebenen Versatz bezogen auf die erfasste Position des Referenzmerkmals erzeugt. Unter diesen Umständen ist der Abstand zwischen den zwei Schnitten immer der gleiche.

Wenn man hingegen annimmt, dass der Fördermechanismus exakt arbeitet, dass aber durch Verzug des Strangmaterials beim Formen des Reliefs Schwankungen im Abstand von aufeinanderfolgenden Reliefs entstehen können, so ist es zweckmäßiger, die Position des Schnitts entlang des in Förderrichtung hinteren Endes eines Reliefs anhand der vor dem letzten Fördern erfassten Position des Referenzmerkmals eben dieses Reliefs festzulegen und eine in der gleichen Stellung des Materialstrangs erfasste Position des Referenzmerkmals eines darauffolgenden Reliefs allein zur Festlegung der Schnittposition an dessen in Förderrichtung vorderem Ende heranzuziehen.

Der praktisch relevanteste Fall ist der, dass sowohl eine Ungenauigkeit des Fördermechanismus als auch eine Verformung des Strangmaterials beim Reliefformen in Betracht kommt. In diesem Fall ist es zweckmäßig, die Schnittposition für die hintere Kante eines Reliefs zwischen den zwei Positionen festzulegen, die sich in den zwei zuvor genannten Fällen ergeben.

Weitere Merkmale und Vorteile der Erfindung ergeben sich aus der nachfolgenden Beschreibung eines Ausführungsbeispiels mit Bezug auf die beigefügten Figuren. Es zeigen:
- Fig. 1: eine schematische Seitenansicht einer erfindungsgemäßen Vorrichtung zum Formen von Gegenständen aus einem Materialstrang;
- Figs. 2a-c: Draufsichten auf ein Ende des Materialstrangs in verschiedenen Phasen eines ersten Schneidzyklus des erfindungsgemäßen Verfahrens;
- Figs. 3a, 3b: Draufsichten auf einen zu schneidenden Abschnitt des Materialstrangs in einem späteren Schneidzyklus gemäß einer ersten Ausgestaltung des Verfahrens;
- Figs. 4a, 4b: Draufsichten analog denen der Figs. 3a, 3b gemäß einer zweiten Ausgestaltung des Verfahrens;
- Figs. 5a, 5b: Draufsichten analog Figs. 3a, 3b gemäß einer dritten Ausgestaltung des Verfahrens;
- Fig. 6: eine Seitenansicht einer ersten alternativen Ausgestaltung der erfindungsgemäßen Vorrichtung; und
- Fig. 7: eine Seitenansicht einer zweiten alternativen Ausgestaltung.

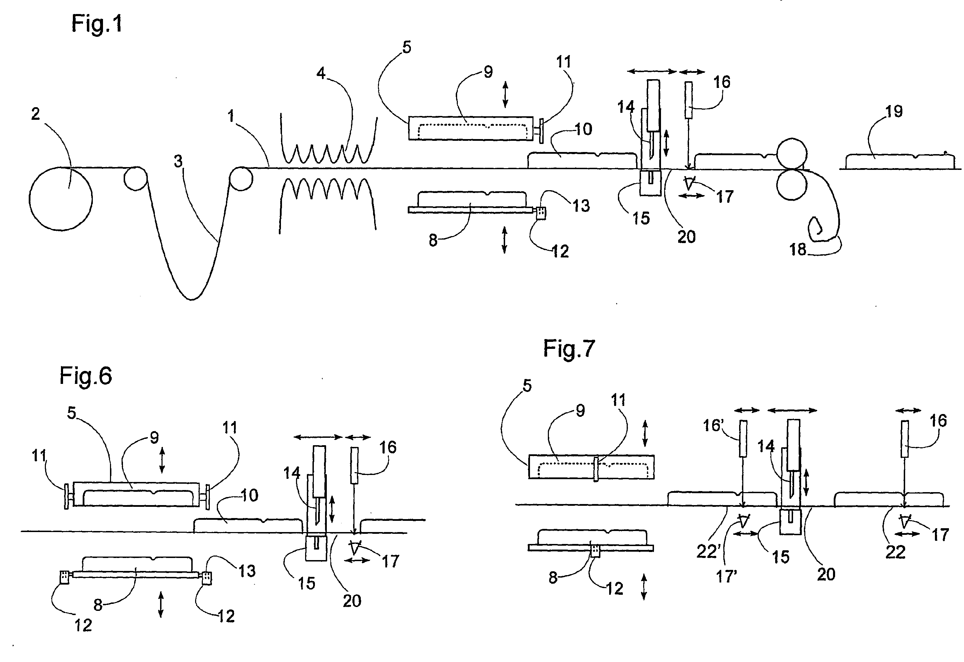

Fig. 1 zeigt in einer schematischen Seitenansicht eine Vorrichtung zum Produzieren von Türinnenplatten für Kältegerätetüren aus einem Materialstrang aus Polystyrol oder einem anderen geeigneten Kunststoff. Der Materialstrang 1 wird von einer Vorratsrolle 2 abgewickelt und entlang einer Förderstrecke nacheinander durch einen Pufferabschnitt 3, eine Heizeinrichtung 4, ein Formwerkzeug 5, eine Trenneinrichtung 6 und eine Längsschneideinrichtung 7 geführt. Der Materialstrang 1 wird entlang der Förderstrecke von der Heizeinrichtung 4 zur Längsschneideinrichtung 7 schrittweise gefördert. Der Pufferabschnitt 3 dient dazu, in jedem Förderschritt die benötigte Länge an Materialstrang 1 schnell zu liefern, ohne dass hierfür die Vorratsrolle 2, die eine beachtliche Masse haben kann, abrupt beschleunigt werden muss.

Die Heizeinrichtung 4 besteht aus zwei Elementen, die jeweils oberhalb und unterhalb des Materialstrangs 1 angeordnet sind und diesen auf eine Temperatur erhitzen, in der das Strangmaterial geschmeidig wird und sich in dem Formwerkzeug 5, sobald es dies erreicht hat, leicht formen läßt.

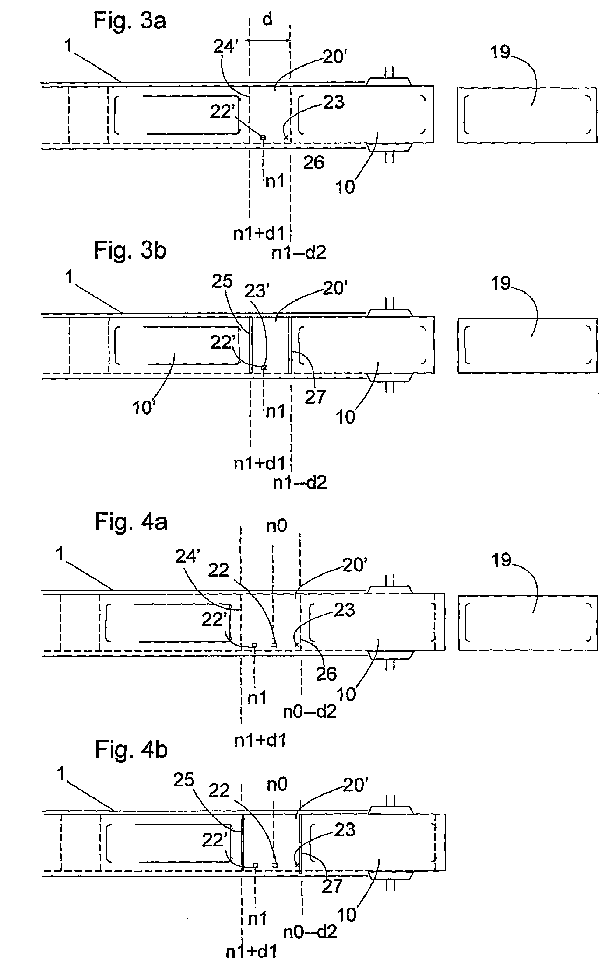

Das Formwerkzeug 5 umfasst zwei Teile, einen Stempel 8 und eine Matrize 9, die aufeinander zu bewegbar sind, um einen Abschnitt des Materialstrangs 1 zwischen sich einzuklemmen und an diesem ein Relief 10 zu formen, das der dreidimensionalen Gestalt der zu produzierenden Türinnenplatte entspricht, und die anschließend auseinanderbewegbar sind, um das Relief 10 freizugeben. An den zwei Teilen 8, 9 des Formwerkzeugs 5 sind jeweils seitlich außerhalb ein Dorn 11 bzw. ein Körper 12 mit einer zu dem Querschnitt des Dorns 11 komplementären Aussparung 13 fest montiert. Dorn 11 und Körper 12 sind so im Bezug aufeinander positioniert, dass der Dorn 11 unmittelbar vor dem Ende einer Gegeneinanderbewegung der zwei Teile 8, 9 des Formwerkzeugs 5 mit der Aussparung 13 in Eingriff gerät und so einen Durchbruch 22 (siehe Fig. 3, 4 oder 5), im vorliegenden Fall mit scharfkantiger, kreisförmiger Kontur, in den Materialstrang 1 stanzt. Der Durchbruch ist hier von den Rändern des Materialstrangs 21 beabstandet dargestellt, er könnte aber auch an einen Rand angrenzen und zu diesem hin offen sein.

Dorn 11 und Aussparung 13 haben jeweils einen rechteckigen Querschnitt mit zwei zur Förderrichtung des Materialstrangs 1 senkrechten Rändern.

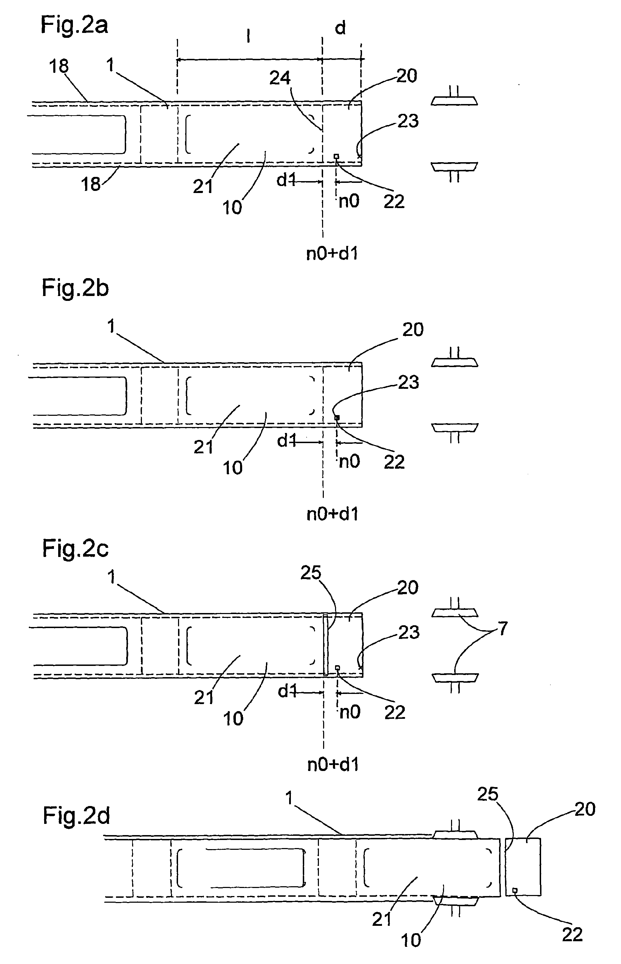

Bei der hier gezeigten Ausgestaltung sind der Dorn 11 und der Körper 12 bezogen auf die Förderrichtung des Materialstrangs 1 stromabwärts vom Formwerkzeug 5 montiert, um das Loch 22 in einem hier als Reserveabschnitt 20 (siehe Fig. 2a) bezeichneten Abschnitt des Strangs zu bilden, der vor dem in Transportrichtung vorderen Ende des geformten Reliefs 10 liegt und später nicht zu der zu produzierenden Türinnenplatte gehören wird, sondern abgeschnitten und verworfen wird.

Alternativ bestünde auch die Möglichkeit, den Dorn und Körper bezogen auf die Förderrichtung stromaufwärts vom Formwerkzeug 5 zu montieren. Sie könnten auch seitlich am Formwerkzeug 5 angebracht sein, so dass sie einen Durchbruch in einen seitlichen Randbereich des Materialstrangs 1 stanzen, der später im Laufe des Vereinzelns der Türinnenplatten ebenfalls abgetrennt und verworfen wird.

Indem Dorn 11 und Körper 12 so positioniert werden, dass sie das Loch erst möglichst kurz vor Abschluss der Gegeneinanderbewegung der Formen 8, 9 des Formwerkzeugs 5 stanzen, wird erreicht, dass eine mit dem Formvorgang eventuell verbundene Verziehbewegung des Materials des Strangs 1 in der Umgebung des Reliefs 10 zum Zeitpunkt des Stanzens des Durchbruchs 22 weitestgehend abgeschlossen ist, so dass der Durchbruch 22 in einer exakt reproduzierbaren örtlichen Beziehung zu dem geformten Relief 10 steht.

Alternativ wäre es auch möglich, den Dorn 11 und/oder den Körper 12 jeweils mit einer eigenen, von dem Formwerkzeug 5 getrennten Antriebseinrichtung auszustatten und deren Bewegung so zu steuern, dass der Durchbruch 22 erst nach Abschluss des Formvorgangs, also bei maximal gegeneinanderbewegten Teilen 8, 9 des Formwerkzeugs 5, oder erst im Laufe der Auseinanderbewegung der Teile 8, 9 erzeugt wird.

Als eine weitere Alternative könnten anstelle des Dorns 11 und des Körpers 12 auch ein an das Formwerkzeug 5 gekoppelter Druckkopf zum Aufdrucken einer Referenzmarkierung auf dem Materialstrang 1 oder ein leistungsstarker Laser zum Erzeugen eines Referenzmerkmals eingesetzt werden.

Nach dem Formen des Reliefs 11 wird der Materialstrang 1 schrittweise um eine solche Strecke weiter gefördert, dass ein Reserveabschnitt 20 zwischen zwei nacheinander geformten Reliefs 10 im Bereich der Trenneinrichtung 6 zu liegen kommt. Die Trenneinrichtung 6 umfasst ein Stanzmesser 14 und einen komplementär zur Form des Stanzmessers 14 geschlitzten Körper 15, die sich beiderseits des Materialstrangs 1 gegenüber liegen und über eine begrenzte Weglänge parallel zur Förderrichtung des Materialstrangs 1 verfahrbar sind. Sie umfasst bei diesem Ausführungsbeispiel ferner eine Laserlichtschranke mit einem Laser 16 und einem Photodetektor 17, die ebenfalls parallel zur Förderrichtung verfahrbar sind und die zum Erfassen des mit Dorn 11 und Körper 12 gestanzten Durchbruchs 22 dienen.

Die Laserlichtschranke ist bei einer ersten Variante der erfindungsgemäßen Vorrichtung unabhängig vom Stanzmesser 14 bewegbar, und anhand der von der Laserlichtschranke erfassten Position des Durchbruchs 22 steuert eine (nicht dargestellte) Steuereinheit die Position des Stanzmessers 14 und des geschlitzten Körpers 15 in Förderrichtung so, dass diese Schnitte zwischen benachbarten Reliefs 10 exakt entlang von Linien erzeugen, die Ober- bzw. Unterkanten der zu erzeugenden Türinnenplatten bilden sollen.

Bei einer zweiten Variante der erfindungsgemäßen Vorrichtung ist die Laserlichtschranke an die Bewegung des Stanzmessers 14 bzw. des geschlitzten Körpers 15 in Förderrichtung gekoppelt, so dass das Stanzmesser 14 stets einen festen Abstand von der Laserlichtschranke hat.

Auf die Bewegungsabläufe bei diesen zwei Varianten wird mit Bezug auf die Figs. 2 bis 5 genauer eingegangen.

Die von der Trenneinrichtung 6 erzeugten Schnitte erstrecken sich nicht über die gesamte Breite des Materialstrangs 1, sondern lassen an den Seitenrändern des Strangs 1 jeweils schmale Stege undurchtrennt, so dass der Zusammenhalt des Strangs 1 bestehen bleibt. Erst durch die Längsschneideinrichtung 7, die an beiden Längsseiten des Strangs seitliche Streifen 18 einschließlich der bestehen gelassenen Stege abtrennt, wird der Strang 1 in einzelne fertige Türinnenplatten 19 zerlegt.

Die Steuerung der Position des Stanzmessers 14 der Trenneinrichtung 6 wird im folgenden mit Bezug auf die Figs. 2-4 im Detail erläutert.

Fig. 2a zeigt eine Draufsicht auf ein Ende eines Materialstrangs 1 mit dem ersten an diesem Strang gebildeten Relief 10. Das Relief belegt einen Abschnitt 21 des Strangs mit der Länge 1. Vor dem Reliefabschnitt 21 erstreckt sich ein Reserveabschnitt 20, der nicht Teil der zu produzierenden Türinnenplatte werden wird und abgetrennt werden muss. In diesem Reserveabschnitt 20 befindet sich der Durchbruch 22, der zusammen mit dem Formen des in der Fig. gezeigten Reliefs 10 zwischen Dorn 11 und Körper 12 gestanzt worden ist.

Zu Beginn des Trennvorgangs, in dem in Fig.2a gezeigten Stadium, befindet sich die Laserlichtschranke in einer Nullstellung, die bei diesem Ausführungsbeispiel in Förderrichtung stromabwärts vom Durchbruch 22 liegt. Diese Nullstellung ist in der Fig. durch ein Sternchen 23 gekennzeichnet. Aus dieser Nullstellung heraus wird die Laserlichtschranke stromaufwärts verfahren, um den Durchbruch 22 zu suchen. Im Stadium der Fig. 2b trifft bei einer Position n₀ der Strahl des Lasers 16 auf den Durchbruch 22 und wird vom Photodetektor 17 erfasst.

Je nach Ausgestaltung des Verfahrens, Abmessungen des Strahls des Lasers 16 und des Durchbruchs 22 kann als Referenzposition n₀ die Stelle erfasst werden, an der der Strang mittig durch den Durchbruch 22 geht und folglich die maximale Leistung vom Photodetektor 17 registriert wird, oder es kann ein Rand des Durchbruchs 22 detektiert werden. Um eine exakte Erfassung des Randes zu ermöglichen, hat der Durchbruch 22 zweckmäßigerweise senkrecht zur Förderrichtung verlaufende Ränder.

Wenn angenommen wird, dass der Abstand zwischen der Vorderkante 24 der zu erzeugenden Tür und dem Durchbruch 22, der durch die Positionierung von Dorn 11 und Körper 12 an Formwerkzeug 5 exakt vorgegeben ist, gleich d₁ ist, so wird bei der ersten Variante der erfindungsgemäßen Vorrichtung nach Erfassen des Durchbruchs 22 an der Position n₀ das Stanzmesser 14 auf die Position n₀+d₁ gefahren, um dort einen Schlitz 25, wie in Fig. 2c gezeigt, zu stanzen. Bei der zweiten Variante der erfindungsgemäßen Vorrichtung sind das Stanzmesser 14 und die Laserlichtschranke im festen Abstand d₁ aneinander gekoppelt, so dass in dem Moment, in dem die Laserlichtschranke den Durchbruch 22 erfasst, das Stanzmesser 14 bereits korrekt positioniert ist und den Schlitz 25 schneidet.

Anschließend wird der Materialstrang um eine vorgegebene Strecke gefördert. Im Laufe dieses Fördervorgangs werden die seitlichen Streifen 18 an den Längsrändern des Strangs 1 von der Längsschneideinrichtung 7 abgeschnitten, so dass der Reserveabschnitt 20 vollständig vom Reliefabschnitt 21 getrennt wird (siehe Fig. 2d).

Nach dem Fördern befindet sich ein zweiter Reserveabschnitt 20' in Höhe der Trenneinrichtung 6.

Fig. 3a zeigt eine Draufsicht auf den Materialstrang 1 gemäß einer ersten Ausgestaltung des Verfahrens im anschließenden Trennvorgang. Auf den Reserveabschnitt 20' folgt ein Reliefabschnitt 21 Aufgrund von Ungenauigkeiten des Fördermechanismus weicht die Strecke, um die der Strang 1 gefördert worden ist, von der Summe der Längen I+d des Reliefabschnitts 21 und des Reserveabschnitts 20 ab. Der Abstand zwischen aufeinanderfolgenden Reliefs wird jedoch als konstant angenommen. In diesem Fall beginnt die Laserlichtschranke erneut, aus der Nullstellung 23 den Strang 1 nach dem Durchbruch 22' abzusuchen, und findet diesen an der Position n₁. Im Falle der ersten Variante der erfindungsgemäßen Vorrichtung platziert daraufhin die Steuereinheit das Stanzmesser 14 einmal an der Position n₁+d₁, um einen Schlitz 25 an der vorderen Kante 24' der zweiten Türinnenplatte zu schneiden, und an der Position n₁-d₂, wobei d₁+d₂=d, um einen Schlitz 27 an der hinteren Kante 26 der ersten Türinnenplatte zu schneiden. Das Ergebnis ist in Fig. 3b gezeigt. Die Reihenfolge, in der die Schlitze 25, 27 geschnitten werden, ist an sich beliebig. Da das Stanzmesser 14 unabhängig von der Laserlichtschranke bewegbar ist, muss es beim Weitertransport des Strangs 1 nicht in eine Nullstellung zurückgefahren werden, sondern kann ausgehend von der Position, in der es zuvor den in Fig. 2c gezeigten Schlitz 25 geschnitten hat, so verfahren werden, dass die Schlitze 25, 27 der Fig. 3b mit dem jeweils kürzesten Verfahrweg erzeugt werden.

Im Falle der zweiten Variante befindet sich das Stanzmesser 14 bereits an der Position n₁+d₁. wenn die Laserlichtschranke den Durchbruch 22' erfasst. Hier wird daher zunächst der Schlitz 25 erzeugt, für den das Stanzmesser 14 bei Erfassung des Durchbruchs 22' durch die Laserlichtschranke korrekt positioniert ist, und nach Verfahren der gesamten Trenneinrichtung 6 mit Laserlichtschranke und Stanzmesser 14 um die Strecke d auf die Ruheposition zu, wenn sich das Stanzmesser 14 bei n₁-d₂ befindet, wird der Schlitz 27 erzeugt.

Bei der Ausgestaltung der Figs. 4a, 4b hingegen wird angenommen, dass der Fördermechanismus exakt arbeitet und zwischen dem ersten und dem zweiten Schneidzyklus den Materialstrang 1 exakt um die Länge l+d weiter fördert, dass aber aufgrund von Materialverzug beim Formen der Reliefs der Abstand der Reliefs 10, 10' voneinander auf dem Materialstrang 1 und damit die Breite des Reserveabschnitts 20' zwischen zwei Reliefabschnitten variieren kann. In diesem Fall verwendet die Steuereinheit die noch von der vorhergehenden Messung bekannte Position n₀ des dem Reliefabschnitt 21 zugeordneten Lochs 22, um das Stanzmesser 14 bei n₀-d₂ zu positionieren und dort einen Schnitt 27 zu erzeugen. Im Falle der ersten Variante der Vorrichtung wird gleichzeitig die Laserlichtschranke, wie bereits oben beschrieben, verfahren, um den Durchbruch 22' des Reserveabschnitts 20' zu finden, und nachdem dieser gefunden worden ist, wird das Stanzmesser 14 an der Position n₁+d₁ platziert, um einen Schlitz 25 an der vorderen Kante 24' der nächsten Türinnenplatte zu schneiden. Im Falle der zweiten Variante müssen die Schritte des Erzeugens des Schlitzes 27 und des Suchens des Durchbruchs 22' und Erzeugens des Schlitzes 25 nacheinander ablaufen.

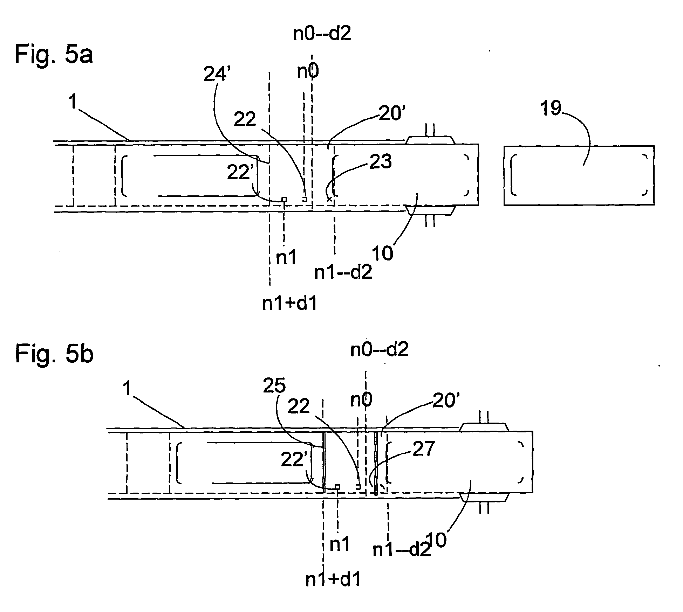

Der in der Praxis relevanteste Fall ist, dass sowohl eine Ungenauigkeit des Fördermechanismus als auch Materialverzug vorkommen können. Dieser Fall ist in den Figs. 5a, 5b dargestellt. Für die Positionierung des Schlitzes 25 an der vorderen Kante 24' des Reliefabschnitts 21', auf den der Durchbruch 22' bezogen ist, ist dies ohne Bedeutung, dieser Schnitt kann, nachdem der Durchbruch 22' erfasst worden ist, exakt platziert werden.

Für die hintere Kante 26 des Reliefabschnitts 21 ergibt sich jedoch eine Ungewissheit, da nicht exakt angegeben werden kann, auf welche Ursache eine Abweichung zwischen den nacheinander erfassten Positionen n₀, n₁ der Durchbrüche 22, 22' zurückzuführen ist. In Anbetracht der oben mit Bezug auf Figs. 3a, 3b, 4a, 4b gelieferten Beschreibung ist jedoch leicht nachvollziehbar, dass ein guter Schätzwert für die Position der hinteren Kante 26. im Bereich zwischen den Positionen n₀-d₂ und n₁-d₂ liegen muss. D.h., so lange der Schlitz 27 der hinteren Kante 26 innerhalb dieses Intervalls gesetzt wird, ist die Wahrscheinlichkeit groß, dass der Schlitz 27 innerhalb des Toleranzbereichs liegt und so eine brauchbare Türinnenplatte erhalten wird.

Dabei kann die exakte Position des Schlitzes 27 innerhalb des Intervalls]n₀-d₂, n₁-d₂[ in Abhängigkeit von einer erwarteten Relevanz der zwei Fehlerquellen so festgelegt werden, dass bei einer Produktionsanlage, wo die Ungenauigkeit des Fördermechanismus als Hauptfehlerquelle angesehen wird, eine Position des Schlitzes 27 näher bei n₁-d₂ und bei Überwiegen von Ungenauigkeit aufgrund von Materialverzug eine Position näher bei n₀-d₂ gewählt wird.

Selbstverständlich wird bei den oben vorgeschlagenen Verfahrensvarianten davon ausgegangen, dass beide Ursachen von Ungenauigkeit nicht so gravierend sind, dass das Intervall ]n₁-d₂, n₀-d₂[ wesentlich größer ist als der Toleranzbereich in der Länge I der zu erzeugenden Türinnenplatten. Wenn diese Voraussetzung nicht gegeben ist, kann zum exakten Schneiden der Türinnenplatten eine Anlage wie jeweils in Fig. 6 bzw. 7 gezeigt, zum Einsatz kommen.

Bei der Anlage der Fig. 6 sind jeweils zwei Dorne 11 am in Transportrichtung vorderen bzw. hinteren Ende des Formwerkzeugs 5 angeordnet, um Referenzmarkierungen in Form von Durchbrüchen jeweils in einem in Förderrichtung vor bzw. hinter dem jeweils in dem Formwerkzeug 5 geformten Relief 10 liegenden Reserveabschnitt 20 zu erzeugen. Auch die aus Laser 16 und Photodetektor 17 bestehende Laserlichtschranke ist doppelt vorhanden, um jeweils in einem Reserveabschnitt die zwei gestanzten Durchbrüche zu erfassen und diese jeweils zum Positionieren der Trenneinrichtung 6 zum Erzeugen von Schlitzen 25 bzw. 27 an beiden Seiten des Reserveabschnitts zu nutzen. Im Falle der zweiten Variante der Vorrichtung sich beide Laserlichtschranken jeweils in einem solchen Abstand starr an das Stanzmesser 14 bzw. den geschlitzten Körper 15 gekoppelt, dass immer dann, wenn eine der Laserlichtschranken einen Durchbruch erfasst, ein Schlitz erzeugt werden kann, wobei je nachdem, welches die erfassende Laserlichtschranke ist, ein Schlitz 25 an der Vorderkante eines Reliefabschnitts oder ein Schlitz 27 an der Hinterkante des vorhergehenden Reliefabschnitts resultiert. Denkbar ist im Falle der ersten Variante auch, eine einzige Laserlichtschranke zum Erfassen beider Durchbrüche im Zeitmultiplex einzusetzen.

Die in Fig. 7 gezeigte Alternative sieht zwei Laserlichtschranken 16, 17 bzw. 16', 17' vor, die in etwa in dem Abstand I+d in Förderrichtung verschiebbar montiert sind, um die Durchbrüche 22, 22' zu erfassen die jeweils einem Reliefabschnitt 10, der bereits die Trenneinrichtung 6 durchlaufen hat und nur noch an seiner hinteren Kante 26 geschnitten werden muss, und einem Reliefabschnitt 10 zugeordnet sind, der die Schneideinrichtung 6 noch nicht durchlaufen hat und im Bereich seiner Vorderkante 24 geschnitten werden soll. Diese Ausgestaltung ermöglicht durch zweimaliges Messen der Position eines gleichen Lochs 22 eine exakte Positionierung der Trenneinrichtung 6 beim Schneiden sowohl der Vorderkante als auch der Hinterkante.

## Patentansprüche

1. Verfahren zum Formen von Gegenständen (19) aus einem Materialstrang (1) und zum Vereinzeln der Gegenstände (19), mit den Schritten:
a) Platzieren eines Abschnitts des Materialstrangs (1) an einem Formwerkzeug (5),
b) Formen eines Reliefs (10) in dem Abschnitt mit Hilfe des Formwerkzeugs (5),
c) Fördern des Materialstrangs (1),
d) Trennen der durch Wiederholen der Schritte a, b, c erhaltenen Reliefs (10) voneinander, um die fertigen Gegenstände (19) zu erhalten, wobei das Trennen eines ersten (10') von einem zweiten Relief (10) das Erfassen eines dem ersten Relief (10') zugeordneten Merkmals (22') an dem Strang (1), das Positionieren eines Schneidwerkzeugs (14, 15) mit einem vorgegebenen örtlichen Versatz (d₁) zu dem erfassten Merkmal (22') und das Erzeugen eines Schnitts (25) zwischen dem ersten und dem zweiten Relief (10, 10') mit Hilfe des positionierten Schneidwerkzeugs (14, 15) umfasst,
wobei beim Formen des ersten Reliefs (10') in einer festen örtlichen Beziehung zu dem ersten Relief (10') ein von dem Relief (10') getrenntes Referenzmerkmal (22') in dem Materialstrang (1) erzeugt wird, und wobei das in Schritt d erfasste Merkmal das Referenzmerkmal (22') ist.

2. Verfahren nach Anspruch 1, **dadurch gekennzeichnet, dass** das Referenzmerkmal ein Durchbruch (22) ist.

3. Verfahren nach Anspruch 2, **dadurch gekennzeichnet, dass** der Durchbruch (22) mit Hilfe einer Laserlichtschranke (16) erfasst wird.

4. Verfahren nach einem der vorhergehenden Ansprüche, **dadurch gekennzeichnet, dass** das Referenzmerkmal (22) mit wenigstens einer senkrecht zur Förderrichtung des Materialstrangs orientierten Kontur erzeugt wird.

5. Verfahren nach einem der vorhergehenden Ansprüche, **dadurch gekennzeichnet, dass** das Relief (10) durch Gegeneinanderbewegen und Auseinanderbewegen von Teilen (8, 9) eines mehrteiligen Formwerkzeugs (5) erzeugt wird, und dass das Referenzmerkmal (22) nach Beginn des Gegeneinanderbewegens und vor Ende des Auseinanderbewegens erzeugt wird, während die Teile (8, 9) des Formwerkzeugs (5) mit dem zu formenden Abschnitt des Materialstrangs (1) in Eingriff sind.

6. Verfahren nach Anspruch 5, **dadurch gekennzeichnet, dass** das Referenzmerkmal (22) im Laufe des Gegeneinanderbewegens erzeugt wird.

7. Verfahren nach einem der vorhergehenden Ansprüche, **dadurch gekennzeichnet, dass** das zweite Relief (10) vor dem ersten (10') geformt wird.

8. Verfahren nach Anspruch 7, **dadurch gekennzeichnet, dass** der Schnitt (25) in Höhe des in Förderrichtung vorderen Endes (24') des ersten Reliefs (10') erzeugt wird.

9. Verfahren nach Anspruch 8, **dadurch gekennzeichnet, dass** das Trennen des ersten (10') und zweiten Reliefs (10) ferner das Erzeugen eines weiteren Schnitts (27) in Höhe des in Förderrichtung hinteren Endes (26) des zweiten Reliefs (10) umfasst.

10. Verfahren nach Anspruch 9, **dadurch gekennzeichnet, dass** der weitere Schnitt mit einem zweiten vorgegebenen Versatz (d₂) bezogen auf die erfasste Position des dem ersten Relief (10') zugeordneten Referenzmerkmals (22') erzeugt wird.

11. Verfahren nach Anspruch 9, **dadurch gekennzeichnet, dass** der weitere Schnitt mit einem zweiten vorgegebenen Versatz (d₂) bezogen auf die vorab erfasste Position eines dem zweiten Relief (10) zugeordneten Referenzmerkmals (22) erzeugt wird.

12. Verfahren nach Anspruch 9, **dadurch gekennzeichnet, dass** der zweite Schnitt mit einem zweiten vorgegebenen Versatz bezogen auf eine Position erzeugt wird, die zwischen der erfassten Position des dem ersten Relief (10) zugeordneten Referenzmerkmals (22') und der vorab erfassten Position eines dem zweiten Relief (10) zugeordneten Referenzmerkmals (22) liegt.

13. Vorrichtung zum Formen von Gegenständen aus einem Materialstrang (1) und zum Vereinzeln der Gegenstände, mit einem Formwerkzeug (5) zum Formen eines Reliefs (10) in einem Abschnitt des Materialstrangs (1), einer Trenneinrichtung (6) zum Trennen von durch das Formwerkzeug (5) geformten Reliefs (10) voneinander und einer Fördereinrichtung zum Fördern des Materialstrangs (1) durch das Formwerkzeug (5) und die Trenneinrichtung (6), wobei die Trenneinrichtung (6) eine Erfassungseinrichtung (16, 17) zum Erfassen der Position eines einem ersten Relief (10) zugeordneten Merkmals an dem Strang (1) und ein anhand einer erfassten Position des Merkmals positionierbares Schneidwerkzeug (7) umfasst, wobei sie eine außerhalb des Formwerkzeugs (5) angeordnete, an das Formwerkzeug (5) gekoppelte Einrichtung zum Erzeugen eines Referenzmerkmals in dem Materialstrang (1) umfasst und wobei die Erfassungseinrichtung (16, 17) zum Erfassen des Referenzmerkmals ausgelegt ist.

14. Vorrichtung nach Anspruch 13, **dadurch gekennzeichnet, dass** das Referenzmerkmal ein Durchbruch ist.

15. Vorrichtung nach Anspruch 14, **dadurch gekennzeichnet, dass** die Erfassungseinrichtung (16, 17) eine Laserlichtschranke ist.

16. Vorrichtung nach einem der Ansprüche 13 bis 15, **dadurch gekennzeichnet, dass** die Einrichtung zum Erzeugen des Referenzmerkmals zum Erzeugen wenigstens einer senkrecht zur Förderrichtung orientierten Kontur ausgelegt ist.

17. Vorrichtung nach einem der Ansprüche 13 bis 16, **dadurch gekennzeichnet, dass** das Formwerkzeug (5) mehrere gegeneinander und auseinander bewegbare Teile (8, 9) umfasst, und dass das Werkzeug (5) zum Erzeugen des Referenzmerkmals einen Dorn (11) und einen Körper (12) mit einer zu dem Dorn (11) komplementären Aussparung (13) umfasst, die jeweils an Teile (8, 9) des Formwerkzeugs (5) gekoppelt sind.

18. Vorrichtung nach Anspruch 15, **dadurch gekennzeichnet, dass** der Dorn (11) und der Körper (12) im auseinanderbewegten Zustand der Teile (8, 9) des Formwerkzeugs (5) außer Eingriff und im gegeneinanderbewegten Zustand der Teile im Eingriff sind.

## Claims

1. Method of shaping articles (19) from a material strip (1) and for separating the articles (19), comprising the steps:
a) positioning a section of the material strip (1) at a mould tool (5),
b) forming a relief (10) in the section with the help of the mould tool (5),
c) conveying the material strip (1),
d) separating the reliefs (10), which are obtained by repetition of the steps a), b) and c), from one another in order to obtain the finished articles (19), wherein the separating of a first relief (10') from a second relief (10) comprises detection of a feature (22'), which is associated with the first relief (10'), at the strip (1), positioning of a cutting tool (14, 15) with a predetermined local offset (d₁) relative to the detected feature (22') and producing a cut (25) between the first and second reliefs (10, 10') with the help of the positioned cutting tool (14, 15), wherein on forming the first relief (10') in a fixed local relationship to the first relief (10') a reference feature (22') separate from the relief (10') is produced in the material strip (1) and wherein the feature detected in step d) is the reference feature (22').

2. Method according to claim 1, **characterised in that** the reference feature is a break-through (22).

3. Method according to claim 2, **characterised in that** the break-through (22) is detected with the help of a laser light barrier (16).

4. Method according to one of the preceding claims, **characterised in that** the reference feature (22) is produced with at least one contour oriented perpendicularly to the conveying direction of the material strip.

5. Method according to one of the preceding claims, **characterised in that** the relief (10) is produced by movement towards one another and movement away from one another of parts (8, 9) of a multi-part mould tool (5) and that the reference feature, (22) is produced after the beginning of the movement towards one another and before the end of the movement away from one another, while the parts (8, 9) of the mould tool (5) are in engagement with the section of the material strip (1) to be shaped.

6. Method according to claim 5, **characterised in that** the reference feature (22) is produced in the course of the movement towards one another.

7. Method according to one of the preceding claims, **characterised in that** the second relief (10) is shaped before the first relief (10').

8. Method according to claim 7, **characterised in that** the cut (25) is produced at the level of the end (24'), which is foremost in conveying direction, of the first relief (10').

9. Method according to claim 8, **characterised in that** the separating of the first relief (10') and second relief (10) further comprises producing a further cut (27) at the level of the end (26), which is rearward in conveying direction, of the second relief (10).

10. Method according to claim 9, **characterised in that** the further cut is produced with a second predetermined offset (d₂) referred to the detected position of the reference feature (22') associated with the first relief (10').

11. Method according to claim 9, **characterised in that** the further cut is produced with a second predetermined offset (d₂) referred to the previously detected position of a reference feature (22) associated with the second relief (10).

12. Method according to claim 9, **characterised in that** the second cut is produced with a second predetermined offset referred to a position which lies between the detected position of the reference feature (22') associated with the first relief (10) and the previously detected position of a reference feature (22) associated with the second relief (10).

13. Device for shaping articles from a material strip (1) and for separating the articles, comprising a mould tool (5) for forming a relief (10) in a section of the material strip (1), a separating device (6) for separating reliefs (10), which are formed by the mould tool (5), from one another and a conveying device for conveying the material strip (1) through the mould tool (5) and the separating device (6), wherein the separating device (6) comprises a detecting device (16, 17) for detecting the position of a feature, which is associated with a first relief (10), at the strip (1) and a cutting tool (7) positionable on the basis of a detected position of the feature, wherein it comprises a device, which is arranged outside the mould tool (5) and coupled with the mould tool (5), for producing a reference feature in the material strip (1) and wherein the detecting device (16, 17) is designed for detecting the reference feature.

14. Device according to claim 13, **characterised in that** the reference feature is a break-through.

15. Device according to claim 14, **characterised in that** the detecting device (16, 17) is a laser light barrier.

16. Device according to one of claims 13 to 15, **characterised in that** the device for producing the reference mark is designed for producing at least one contour oriented perpendicularly to the conveying direction.

17. Device according to one of claims 13 to 16, **characterised in that** the mould tool (5) comprises a plurality of parts (8, 9) movable towards one another and away from one another and that the tool (5) for producing the reference feature comprises a mandrel (11) and a body (12) with a cut-out (13) complementary with the mandrel (11), the mandrel and body being respectively coupled to parts (8, 9) of the mould tool (5).

18. Device according to claim 15, **characterised in that** the mandrel (11) and the body (12) are out of engagement in the moved-apart state of the parts (8, 9) of the mould tool (5) and are in engagement in the moved-together state of the parts.

## Revendications

1. Procédé pour façonner des objets (19) à partir d'une barre de matière (1) et individualiser ces objets (19), comprenant les étapes suivantes :
a) placement d'une partie de la barre de matière sur un outil de façonnage (5),
b) façonnage d'un relief (10) dans la partie à l'aide de l'outil de façonnage (5),
c) transport de la barre de matière (1),
d) séparation des reliefs (10) obtenus par la répétition des étapes a, b, c les uns des autres, afin d'obtenir les objets (19) achevés, la séparation d'un premier relief (10') d'un second relief (10) comprenant la détection d'une caractéristique (22') attribuée au premier relief (10') sur la barre (1), le positionnement d'un outil de coupe (14, 15) avec un déport (d₁) local prédéfini par rapport à la caractéristique (22') détectée et la génération d'une coupe (25) entre le premier et le second reliefs (10, 10') à l'aide de l'outil de coupe (14, 15) positionné,
une caractéristique de référence (22') séparée du relief (10') étant générée dans la barre de matière (1) lors du façonnage du premier relief (10') dans une relation locale fixe par rapport au premier relief (10'), et la caractéristique détectée à l'étape d étant la caractéristique de référence (22').

2. Procédé selon la revendication 1, **caractérisé en ce que** la caractéristique de référence est un passage (22).

3. Procédé selon la revendication 2, **caractérisé en ce que** le passage (22) est détecté à l'aide d'une barrière lumineuse à laser (16).

4. Procédé selon l'une quelconque des revendications précédentes, **caractérisé en ce que** la caractéristique de référence (22) est générée avec au moins un contour orienté perpendiculairement au sens de transport de la barre de matière.

5. Procédé selon l'une quelconque des revendications précédentes, **caractérisé en ce que** le relief (10) est généré par le déplacement l'une vers l'autre et l'écartement de parties (8, 9) d'un outil de façonnage (5) en plusieurs parties, **en ce que** la caractéristique de référence (22) est générée après le début du déplacement l'une vers l'autre et avant la fin de l'écartement, alors que les parties (8, 9) de l'outil de façonnage (5) sont en prise avec la partie à façonner de la barre de matière (1).

6. Procédé selon la revendication 5, **caractérisé en ce que** la caractéristique de référence (22) est générée au cours du déplacement l'une vers l'autre.

7. Procédé selon l'une quelconque des revendications précédentes, **caractérisé en ce que** le second relief (10) est façonné avant le premier relief (10').

8. Procédé selon la revendication 7, **caractérisé en ce que** la coupe (25) est générée à la hauteur de l'extrémité (24') avant dans le sens de transport du premier relief (10').

9. Procédé selon la revendication 8, **caractérisé en ce que** la séparation du premier relief (10') et du second relief (10) comprend également la génération d'une autre coupe (27) à la hauteur de l'extrémité (26) arrière dans le sens de transport du second relief (10).

10. Procédé selon la revendication 9, **caractérisé en ce que** l'autre coupe est générée avec un second déport (d₂) prédéfini par rapport à la position détectée de la caractéristique de référence (22') attribuée au premier relief (10').

11. Procédé selon la revendication 9, **caractérisé en ce que** l'autre coupe est générée avec un second déport (d₂) prédéfini par rapport à la position détectée auparavant d'une caractéristique de référence (22) attribuée au second relief (10).

12. Procédé selon la revendication 9, **caractérisé en ce que** la seconde coupe est générée avec un second déport prédéfini par rapport à une position qui est disposée entre la position détectée de la caractéristique de référence (22') attribuée au premier relief (10) et la position détectée auparavant d'une caractéristique de référence (22) attribuée au second relief (10).

13. Dispositif pour façonner des objets à partir d'une barre de matière (1) et individualiser les objets, avec un outil de façonnage (5) pour façonner un relief (10) dans une partie de la barre de matière (1), un dispositif de séparation (6) pour la séparation de reliefs (10) formés par l'outil de façonnage (5) les uns des autres et un dispositif de transport pour le transport de la barre de matière (1) par l'outil de façonnage (5) et le dispositif de séparation (6), le dispositif de séparation (6) comprenant un dispositif de détection (16, 17) pour la détection de la position d'une caractéristique attribuée à un premier relief (10) sur la barre (1) et un outil de coupe (7) pouvant être positionné à l'aide d'une position détectée de la caractéristique, sachant qu'il comprend un dispositif, disposé à l'extérieur de l'outil de façonnage (5) et couplé à l'outil de façonnage (5), pour générer une caractéristique de référence dans la barre de matière (1), et le dispositif de détection (16, 17) étant conçu pour détecter la caractéristique de référence.

14. Dispositif selon la revendication 13, **caractérisé en ce que** la caractéristique de référence est un passage.

15. Dispositif selon la revendication 14, **caractérisé en ce que** le dispositif de détection (16, 17) est une barrière lumineuse à laser.

16. Dispositif selon l'une ou quelconque des revendications 13 à 15, **caractérisé en ce que** le dispositif pour générer la caractéristique de référence est conçu pour générer au moins un contour orienté perpendiculairement à la direction de transport.

17. Dispositif selon l'une quelconque des revendications 13 à 16, **caractérisé en ce que** l'outil de façonnage (5) comprend plusieurs parties (8, 9) pouvant être déplacées les unes vers les autres et pouvant être écartées les unes des autres, et **en ce que** l'outil (5) destiné à générer la caractéristique de référence comprend un mandrin (11) et un corps (12) avec un évidement (13) complémentaire du mandrin (11), lesquels sont couplés respectivement à des parties (8, 9) de l'outil de façonnage (5).

18. Dispositif selon la revendication 15, **caractérisé en ce que** le mandrin (11) et le corps (12) sont hors prise lorsque les parties (8, 9) de l'outil de façonnage (5) sont dans l'état écarté et sont en prise lorsque ces parties sont déplacées l'une vers l'autre.
